# EUROPEAN PATENT APPLICATION

(11) **EP 4 033 342 A2**
(43) Date of publication of application: **27.07.2022**
(21) Application number: 22177014.2
(22) Date of filing: 02.06.2022
(51) Int. Cl.: G06F 3/04842, G06F 3/0482, G06F 3/04892, G06F 3/023, G06F 3/14, H04M 1/72415

(54) **METHOD AND APPARATUS FOR CONTROLLING INTERFACE FOCUS ON INTERFACE, ELECTRONIC DEVICE AND STORAGE MEDIUM**

(30) Priority: 24.06.2021 CN 202110703359
(71) Applicant: Apollo Intelligent Connectivity (Beijing) Technology Co., Ltd., Beijing 100176 (CN)
(72) Inventor: Wang, Yuanbin, Beijing, 100176 (CN); Liu, Shubin, Beijing, 100176 (CN)
(74) Representative: Maiwald Patent- und Rechtsanwaltsgesellschaft mbH

(57) **Abstract**

A method for controlling an interface focus on a display interface is provided. A key operation instruction is acquired (101) from a terminal device. The key operation instruction includes a key identifier and a corresponding key manner. A current display interface is processed (102) based on the key identifier and the key manner. The processed display interface is projected (103) on a display screen of an in-vehicle system.

## Description

### TECHNICAL FIELD

The disclosure relates to a field of computer technologies, and particularly to a method and an apparatus for controlling an interface focus on an interface, an electronic device and a storage medium.

### BACKGROUND

At present, a focus state scene is emerging as the in-vehicle scene has been rapidly developed. In the related art, most of in-vehicle systems control the focus state through hard keys such as a knob or a touchpad. When the physical hardware (e.g., the knob or the touchpad) is broken or an onboard screen of the in-vehicle system that is controlled by touches does not work properly, the user cannot use the focus state. Therefore, how to efficiently and rapidly use a focus state function is a problem to be used.

### SUMMARY

The disclosure provides a method and an apparatus for controlling an interface focus on an interface, an electronic device and a storage medium.

According to one aspect of the disclosure, a method for controlling an interface focus on an interface is provided. The method includes acquiring a key operation instruction from a terminal device, in which the key operation instruction includes a key identifier and a corresponding key manner; processing a current display interface based on the key identifier and the key manner; and projecting the processed display interface on a display screen of an in-vehicle system.

According to another aspect of the disclosure, an apparatus for controlling an interface focus on an interface is provided. The apparatus includes: an acquiring module, configured to acquire a key operation instruction from a terminal device, in which the key operation instruction includes a key identifier and a corresponding key manner; a processing module, configured to process a current display interface based on the key identifier and the key manner; and a projecting module, configured to project the processed display interface on a display screen of an in-vehicle system.

According to another aspect of the disclosure, an electronic device is provided. The electronic device includes: at least one processor; and a memory communicatively connected to the at least one processor. The memory stores instructions executable by the at least one processor. When the instructions are performed by the at least one processor, the at least one processor is caused to perform a method for controlling an interface focus on an interface in the disclosure.

According to another aspect of the disclosure, a non-transitory computer readable storage medium stored with computer instructions is provided. The computer instructions are configured to cause the computer to perform the method for controlling an interface focus on an interface according to the embodiment of the disclosure.

According to another aspect of the disclosure, a computer program product including a computer program is provided. When the computer program is performed by a processor, the method for controlling an interface focus on an interface according to the disclosure is executed.

The disclosure has the following advantages or beneficial effects.

The processed display interface is obtained by processing current display interface based on the key identifier and the corresponding key manner from a terminal device, and the processed display interface is projected on the display screen of the in-vehicle system. Therefore, the processing of the current display interface is realized through the key operation instruction from the terminal device, the processed display interface is synchronized to the display screen of the in-vehicle system, and the focus state function is achieved by the hardware keys of the terminal device, which improves the user experience and facilitates use.

It is understandable that, the content described in the part is not intended to identify key or important features of disclosure, nor intended to limit the scope of the disclosure. Other features of the disclosure will be easy to understand through the following specification.

### BRIEF DESCRIPTION OF THE DRAWINGS

The drawings are intended to understand the solution, and do not constitute a limitation to the disclosure.
FIG. 1 is a flowchart illustrating a method for controlling an interface focus on an interface according to one embodiment of the disclosure.
FIG. 2 is a flowchart illustrating a method for controlling an interface focus on an interface according to another embodiment of the disclosure.
FIG. 3 is schematic diagram illustrating a region division related to the focus state according to one embodiment of the disclosure.
FIG. 4 is a schematic diagram illustrating a technical solution of an agile focus state according to one embodiment of the disclosure.
FIG. 5 is a schematic diagram illustrating an apparatus for controlling an interface focus on an interface according to one embodiment of the disclosure.
FIG. 6 is a schematic diagram illustrating an apparatus for controlling an interface focus on an interface according to another embodiment of the disclosure.
FIG. 7 is a block diagram illustrating an electronic device configured to perform a method for controlling an interface focus on an interface according to embodiments of the disclosure.

### DETAILED DESCRIPTION

The embodiments of the disclosure are described as below with reference to the accompanying drawings, which include various details to facilitate understanding, and should be considered as examples. Therefore, those skilled in the art should realize that various changes and modifications may be made to the embodiments described herein without departing from the scope and spirit of the disclosure. Similarly, for clarity and conciseness, descriptions of well-known functions and structures are omitted in the following descriptions.

At present, a focus state scene is emerging as the in-vehicle scene has been rapidly developed. The in-vehicle scene refers to a scene inside the vehicle that is monitored or estimated by an in-vehicle system. The in-vehicle system includes sensors that measure, capture, and/or receive data relating to the attributes of the vehicle, and a set of onboard information and entertainment devices for realizing the information communication between users and the vehicle and between the vehicle and the outside world. The focus state scene refers to a scene describing a focus state of an interface focus on an onboard screen of the in-vehicle system. The interface focus refers to an element on the onboard screen, and the focus state refers to highlighting the element, such that the element can be interacted with. In the related art, most of in-vehicle systems control the focus state through hard keys such as a knob or a touchpad. When the physical hardware (e.g., the knob or the touchpad) is broken or an onboard screen of the in-vehicle system that is controlled by touches does not work properly, the user cannot use the focus state. Therefore, how to efficiently and rapidly use a focus state function is a problem to be used.

A method and an apparatus for controlling an interface focus on an interface, an electronic device and a storage medium according to the embodiments of the disclosure will be described below with reference to attached drawings.

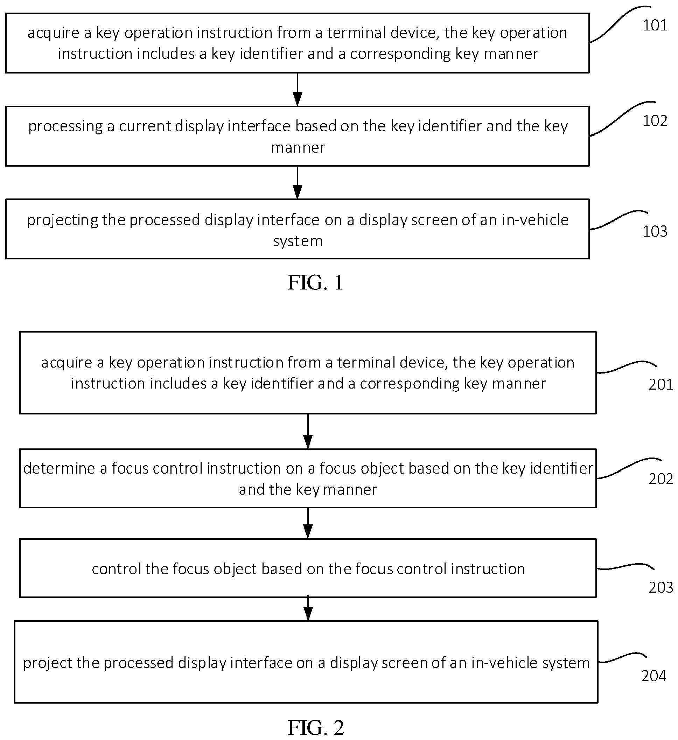

FIG. 1 is a flowchart illustrating a method for controlling an interface focus on an interface according to one embodiment of the disclosure. The executive body of the method is an apparatus for controlling an interface focus on an interface. The apparatus may be implemented by means of a software and/or a hardware and may be included in a terminal device or an electronic device for controlling the terminal device. Alternatively, the apparatus may be a terminal device or an electronic device for controlling the terminal device.

As illustrated in FIG. 1, the method for controlling an interface focus on an interface may include the following.

At block 101, a key operation instruction is acquired from a terminal device. The key operation instruction includes a key identifier and a corresponding key manner.

In some embodiments, the "terminal device" mentioned in the disclosure may be, but not limited to, a smart phone, a tablet computer, a smart portable device, etc.

It is understandable that, the key identifier included in the key operation instruction refers to an identifier of an operated key. For example, the operated key may be a volume increasing key, a volume reducing key, or a power supply key. The corresponding key manner included in the key operation instruction refers to a manner of operating the operated key. For example, the key manner may include, but not limited to, a single click, a double click, a long press, etc.

At block 102, a current display interface is processed based on the key identifier and the key manner.

In some embodiments, the obtained key identifier and the key manner can be used to simulate an event message corresponding to a hardware key related to an interface focus of the in-vehicle system. Correspondingly, the focus state on the current display interface may be controlled based on the event message to acquire a processed display interface.

At block 103, the processed display interface is projected on a display screen of the in-vehicle system.

With the method for controlling an interface focus on the display interface according to the disclosure, the processed display interface is obtained by processing the current display interface based on the key identifier and the corresponding key manner from a terminal device, and the processed display interface is projected on the display screen of the in-vehicle system. Therefore, the processing of the current display interface is realized through the key operation instruction from the terminal device, the processed display interface is synchronized to the display screen of the in-vehicle system, and the focus state function is achieved by the hardware keys of the terminal device, which improves the user experience and facilitates use.

FIG. 2 is a flowchart illustrating a method for controlling an interface focus on an interface according to another embodiment of the disclosure. It is understandable that, descriptions are made by taking the current display interface including one or more focus objects as an example. The focus object refers to a page object that can be displayed in a focus state manner. For example, the focus object may be a focus region or a focus control within the focus region that can be displayed in the focus state manner. The focus state manner refers to selecting the focus object and the focus object can be interacted with.

As illustrated in FIG. 2, the method for controlling an interface focus on an interface may include the following.

At block 201, a key operation instruction is acquired from a terminal device. The key operation instruction includes a key identifier and a corresponding key manner. The descriptions of block 101 are also applicable to the block 201.

At block 202, a focus control instruction on the focus object is determined based on the key identifier and the key manner.

At block 203, the focus object is controlled based on the focus control instruction.

In some embodiments, it is possible that there are a plurality of focus objects on the current display interface. In this case, in order to accurately control the plurality of focus objects, when the focus control instruction is a displaying instruction of displaying focus objects in the focus state manner, a displaying sequence of displaying the focus objects in the focus state manner is determined based on the displaying instruction, and the plurality of focus objects are displayed sequentially in the focus state manner based on the displaying sequence. Thus, the key operation instruction from the terminal device may be used to control the displaying sequence of displaying the plurality of focus object in the focus state manner, to accurately control the plurality of focus objects on the current display interface.

In some examples, the focus object is a focus region, and in this case, displaying the focus object in the focus state manner can be displaying a focus frame enclosing the focus region. As an example, in response to receiving a long press operation on the power supply key of the terminal device, it can be determined that the focus control instruction corresponding to the power supply key and the long press operation is displaying the focus regions in the focus state manner one by one along a designated direction, such that the displaying sequence of displaying the plurality of focus regions in the focus state manner can be determined based on the designated direction and the focus region that is displayed in the focus state. The focus frame is displayed on the focus regions sequentially based on the displaying sequence.

As another example, in response to receiving a long press operation on the volume increasing key of the terminal device, it can be determined that the focus control instruction corresponding to the volume increasing key and the long press operation is displaying a plurality of focus controls within a focus region in the focus state manner in turn along a designated direction (such as downward or rightward). Based on the designated direction (such as downward or rightward) and the focus region that is displayed in the focus state manner currently, the plurality of focus objects can be displayed in the focus state manner sequentially in a such way that a focus control within the focus region is quickly selected and the focus frame moves on the focus controls along the designated direction (such as downward or rightward).

As still another example, in response to receiving a long press operation on the volume reducing key of the terminal device, it can be determined that the focus control instruction corresponding to the volume reducing key and the long press operation is displaying a plurality of focus controls within a focus region in the focus state manner in turn along a designated direction (such as leftward or upward). Based on the designated direction (such as leftward and upward) and the focus region that is displayed in the focus state manner currently, the plurality of focus objects can be displayed in the focus state manner sequentially in a such way that a focus control within the focus region is quickly selected and the focus frame moves on the focus controls along the designated direction (such as leftward or upward).

In some examples, the way of displaying the focus object in the focus state manner may be for example highlighting the focus object, displaying a focus frame enclosing the focus object, proportionally magnifying the focus object or the like. The way of displaying the focus object in the focus state manner is not limited in the disclosure. In actual applications, the way of displaying a focus object in the focus state manner can be determined based on the actual requirements.

In some examples, the focus object is a focus region. When the focus control instruction is a confirmation instruction on a focus region, a specified focus control within the focus region may be determined based on the confirmation instruction and displayed in the focus state manner. Therefore, the key operation instruction from the terminal device can be used to conveniently control to display the specified focus control within the focus region on the current display interface in the focus state manner, which avoids a situation that the focus regions on the current display interface cannot be controlled when the hardware keys of the in-vehicle system cannot work improperly.

As an example, displaying the focus object in the focus state manner is displaying the focus object through the focus frame, i.e., displaying a focus frame enclosing the focus object to achieve the displaying of the focus object in the focus state manner. In response to receiving a double click operation on the power supply key of the terminal device, it can be determined that the key operation instruction includes the key identifier of the power supply key and the double click manner. In a case that the focus control instruction corresponding to the key identifier of the power supply key and the double click manner is the confirmation instruction on the focus region, the simulation that the focus control within the focus frame of the current focus region is clicked on is achieved.

As another example, in response to receiving a double click operation on the volume increasing key of the terminal device, it can be determined that the key operation instruction includes a key identifier of the volume increasing key and the double click manner. In a case that the focus control instruction corresponding to the key identifier of the volume increasing key and the double click manner is the confirmation instruction on a focus region, the simulation that the focus control within the focus frame of the current focus region is clicked on is achieved.

As still another example, in response to receiving a double click operation on the volume reducing key of the terminal device, it may be determined that the key operation instruction includes the key identifier of the volume reducing key and the double click manner. In a case that the focus control instruction corresponding to the key identifier of the volume reducing key and the double click manner is the confirmation instruction on a focus region, the simulation that a focus control within the focus frame of the current focus region is clicked on is achieved.

It is to be noted that, at least one focus control may be arranged in each focus region, such that in response to receiving the confirmation instruction on a focus region, a corresponding focus control within the focus region is displayed in the focus state manner. The corresponding focus control may be any one of the at least one focus control within the focus region.

In some examples, the focus object is a focus control within a focus region. When it is determined that the focus control instruction is a clicking instruction on a focus control based on the key operation instruction, a corresponding operation can be performed on the focus control based on the clicking instruction. Therefore, the key operation instruction from the terminal device can be used to control the focus control on the current display interface. That is, the control of the focus control on the current display interface through the key operation of the terminal device is achieved.

The focus control is a control within a focus region, which may be in any forms. For example, the focus control is a button, a textbox, or the like.

In some example, the focus control instruction may be a focus state switching instruction. In this case, a first focus object that is in the focus state currently is acquired, a second focus state is determined based on the focus state switching instruction and the first focus object, and the focus object displayed in the focus state manner is switched from the first focus object to the second focus object. That is, after the second focus object is determined, the second focus object instead of the first focus object is displayed in the focus state manner. Thus, the key operation instruction from the terminal device can be used to control the switching between the focus objects on the current display interface. That is, the control of switching the focus objects on the current display interface through the key operation of the terminal device is achieved.

In some examples, the focus object is a focus region and in this case, displaying the focus object in the focus state manner is displaying a focus frame enclosing the focus region. In response to receiving a single click operation on the power supply key of the terminal device, it can be determined that the focus control instruction is the focus state switching operation based on the power supply key. A switching operation direction can be determined based on the single click operation, a second focus region can be determined based on the first focus region that is displayed in the focus state manner currently and the focus state switching direction, and the focus frame switches from the first focus region to the second focus region. That is, the focus frame enclosing the second focus region is displayed and the focus frame enclosing the first focus region is not displayed.

As another example, in the case that the focus frame enclosing a first focus control within a focus region is displayed, in response to monitoring a single click operation on the volume increasing key of the terminal device, it may be determined that the focus control instruction is the focus state switching instruction based on the volume increasing key. The switching direction (such as downward or rightward) can be determined based on the single click operation. The second focus control can be determined based on the first focus control that is displayed currently in the focus state manner and the switching direction. The focus frame is switched from the first focus control to the second focus control. It is understandable that the second focus control is located on the right or below the first focus control.

As another example, in the case that a focus frame enclosing a first focus control within a focus region is displayed, in response to monitoring a single click operation on the volume reducing key of the terminal device, it can be determined that the focus control instruction is the focus state switching instruction based on the volume reducing key. The switching operation (such as upward or leftward) can be determined based on the single click operation. A second focus control can be determined based on the first focus control that is currently displayed in the focus state manner and the switching direction. The focus frame is switched from the first focus control to the second focus control. It is understandable that the second focus control is located on the left or above the first focus control.

At block 204, the processed display interface is projected on a display screen of the in-vehicle system.

With the method for controlling an interface focus on a display interface according to embodiments of the disclosure, the focus control instruction on a focus object on a current display interface is determined based on the key identifier and the corresponding key manner from the terminal device, such that the focus object is controlled and the processed display interface is projected on the display screen of the in-vehicle system. Therefore, the key operation instruction from the terminal device can be used to process the current display interface and the processed display interface can be synchronized to the display screen of the in-vehicle system. In this way, the focus state function of the in-vehicle system can be achieved efficiently and agilely through the hardware keys of the phone. In addition, the in-vehicle system that does not support the focus state or the in-vehicle system whose hardware keys related to the focus state can achieve the focus state function through the hardware keys of the terminal device, which facilitates use.

On the basis of the above embodiments, in a process of displaying the focus object on the current display interface in the focus state manner based on the key identifier and the key manner, a displaying duration corresponding to the focus object can be determined based on the key identifier and the key manner, such that a duration of displaying the focus object in the focus state can be controlled based on the displaying duration corresponding to the focus object. Therefore, the control of the duration of displaying the focus object in the focus state manner is achieved based on the key operation on the terminal device.

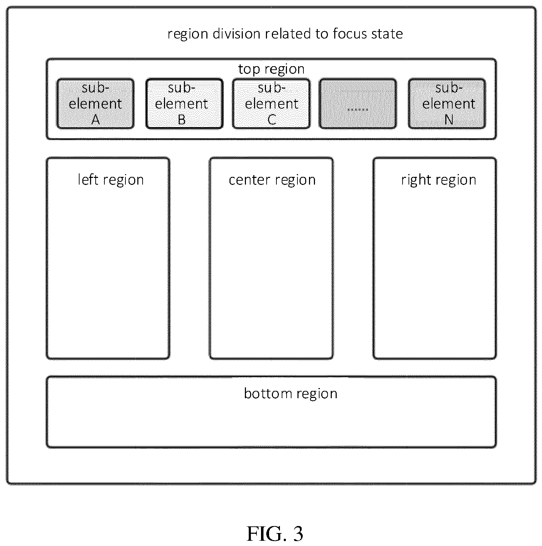

In some embodiments, the display interface may be divided into five focus regions based on a layout and an interaction definition, including a top region, a bottom region, a left region, a right region, and a center region. FIG. 3 illustrates a schematic diagram of the focus regions. Any way can be used to divide the display interface, and the focus region may have any shape such as rectangle, circle, ellipse, which are not limited in the disclosure.

Each focus region illustrated in FIG. 3 can include multiple focus controls. In response to receiving the focus state switching operation on the in-vehicle system, the focus region to be displayed in the focus state manner can be switched. After a focus region is selected and displayed in the focus state manner, one of the multiple focus controls within the focus region can be selected and displayed in the focus state manner.

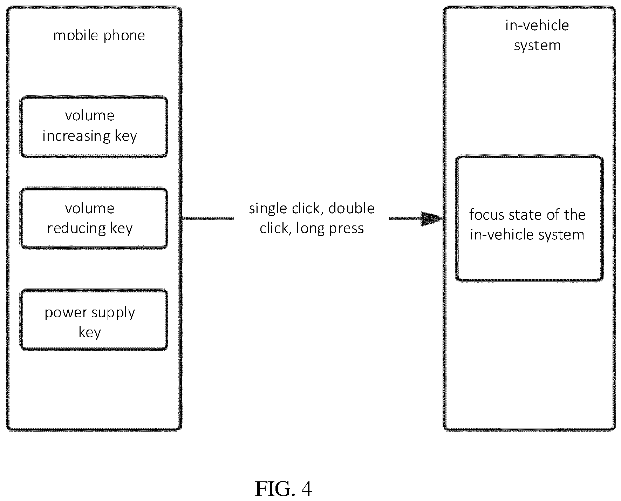

In some embodiments, in order to solve a problem that the in-vehicle system controls the displaying of the focus object in the focus state manner through the hardware components (such as a knob or a touchpad), which causes a high dependency on hardware components and self-support by the hardware component of the in-vehicle system, in the disclosure, the simulation of functions achieved by the hardware keys of the in-vehicle system can be implemented through the hardware keys (such as the volume increasing key, the volume reducing key, and the power supply key) of the terminal device, as illustrated in FIG. 4.

In some embodiments, after the key operation instruction from the terminal device is acquired, the key operation instruction may be sent to the in-vehicle system. The in-vehicle system may simulate operation information of a corresponding hardware key based on the key operation instruction, generate a corresponding control instruction based on the operation information of the hardware key of the in-vehicle system, and send the control instruction to the terminal device. The terminal device performs focus state control on the current display interface based on the control instruction sent by the in-vehicle system, and synchronize the processed display interface to the in-vehicle system such that the processed display interface is synchronously displayed on the display screen.

In some embodiments, the display interface is processed based on the key identifier and the corresponding key manner included in the key operation instruction. The processing of the display interface is described as follows. In an implementation, in response to detecting that the volume increasing key is single clicked, a focus control within a focus region is displayed in the focus state manner by displaying a focus frame enclosing the focus control. Every time the single click on the volume increasing key is detected, the focus frame moves to a next focus control slowly rightwards or downwards, and the focus frame can move circularly through of all focus controls within the focus frame. In response to detecting that the volume increasing key is long pressed, a focus control is quickly selected and the focus frame moves quickly on the focus controls rightwards or downwards. In response to detecting that the volume increasing key is double clicked, clicking on a corresponding focus control within the focus frame is simulated.

In another implementation, in response to detecting that the volume reducing key is single clicked, a focus control within a focus region is display in the focus state manner by displaying a focus frame enclosing the focus control. Every time the single click on the volume reducing key is detected, the focus frame moves to a next focus control slowly leftwards or upwards, and the focus frame can move circularly through of all focus controls within the focus frame. In response to detecting that the volume reducing key is long pressed, a focus control is quickly selected and the focus frame moves quickly on the focus controls leftwards or upwards. In response to detecting that the volume reducing key is double clicked, clicking on a corresponding focus control within the focus frame is simulated.

In still another implementation, in response to detecting that the power supply key is single clicked, a focus region is displayed in the focus state manner by displaying a focus frame enclosing the focus region. Every time the single click on the power supply key is detected, the focus frame moves to a next focus region included in the current display interface slowly rightwards or downwards, and the focus frame can move circularly through of all focus regions included in the current display interface. In response to detecting that the power supply key is long pressed, a focus region on the current display interface is quickly selected. In response to detecting that the power supply key is double clicked, a currently selected focus region is accessed and the focus frame moves to a focus control within the currently selected focus region.

In order to achieve the above embodiments, the disclosure further provides an apparatus for controlling an interface focus on a display interface.

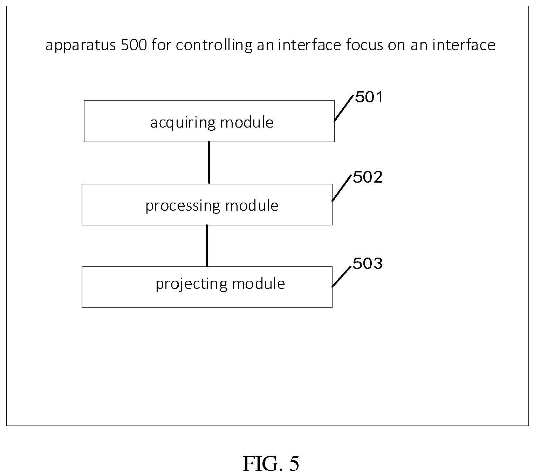

FIG. 5 is a diagram illustrating an apparatus for controlling an interface focus on an interface according to one embodiment of the disclosure.

As illustrated in FIG. 5, the apparatus 500 includes an acquiring module 501, a processing module 502 and a projecting module 503.

The acquiring module 501 is configured to acquire a key operation instruction from a terminal device. The key operation instruction includes a key identifier and a corresponding key manner.

The processing module 502 is configured to process a current display interface based on the key identifier and the key manner.

The projecting module 503 is configured to project the processed display interface on a display screen of an in-vehicle system.

The foregoing explanation of the method embodiment for controlling an interface focus on a display interface is also applied to an apparatus for controlling an interface focus on a display interface in the embodiment, which will not be repeated here.

With the apparatus for controlling an interface focus on a display interface according to embodiments of the disclosure, the processed display interface is obtained by processing current display interface based on the key identifier and the corresponding key manner from a terminal device, and the processed display interface is projected on the display screen of the in-vehicle system. Therefore, the processing of the current display interface is realized through the key operation instruction from the terminal device, the processed display interface is synchronized to the display screen of the in-vehicle system, and the focus state function is achieved by the hardware keys of the terminal device, which improves the user experience and facilitates use.

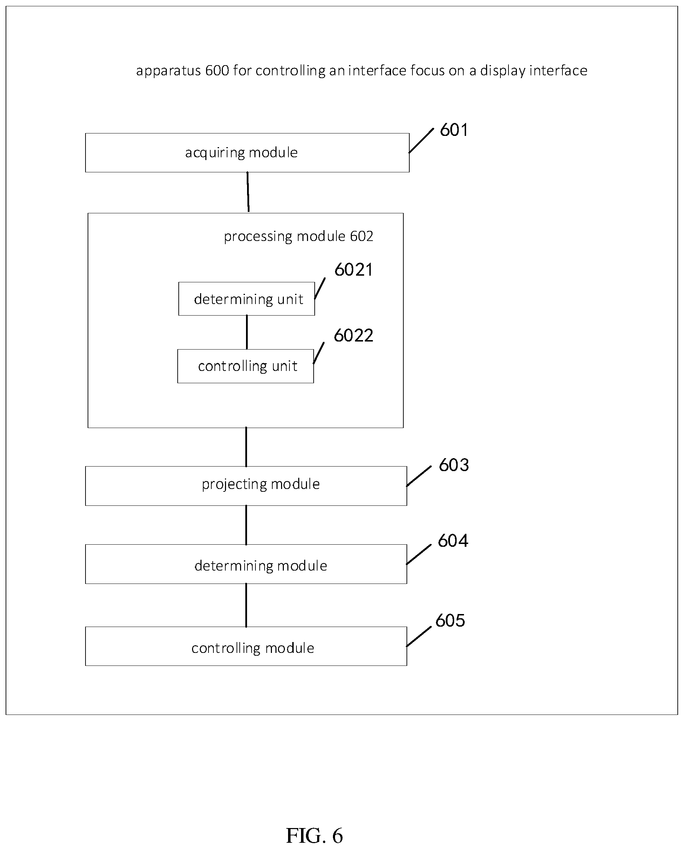

In some examples, as illustrated in FIG. 6, the apparatus f includes: an acquiring module 601, a processing module 602, a projecting module 603, a determining module 604 and a controlling module 605. The processing module 602 may include a determining unit 6021 and a controlling unit 6022.

Descriptions of the acquiring module 601, the processing module 602 and the projecting module 603 can refer to the descriptions of the acquiring module 501, the processing module 502 and the projecting module 503 as illustrated in FIG. 5, which are not described here.

In some examples, the current display interface includes a focus object. The processing module 502 includes a determining unit 6021 and a controlling unit 6022.

The determining unit 6021 is configured to determine a focus control instruction on the focus object based on the key identifier and the key manner.

The control unit 6022 is configured to control the focus object based on the focus control instruction.

In an example, there are a plurality of focus objects. The controlling unit 6022 is configured to: in response to the focus control instruction being a displaying instruction of displaying focus objects in the focus state manner, determine a displaying sequence of displaying the focus objects in the focus state manner based on the displaying instruction of displaying the focus objects in the focus state manner; and control to display the plurality of focus objects sequentially based on the displaying sequence.

In an example, as illustrated in FIG. 6, the apparatus may further include a determining module 604 and a controlling module 605.

The determining module 604 is configured to determine a displaying duration corresponding to the focus object based on the key identifier and the key manner.

The controlling module 605 is configured to control a duration of displaying the focus object in the focus state manner based on the display duration.

In an example, there are a plurality of focus objects. In this case, the controlling unit 6022 is configured to: in response to determining that the focus control instruction is a confirmation instruction on a focus region, determine a specified focus control in the focus region based on the confirmation instruction; and control to display the specified focus in the focus state manner.

In an example, the focus object is a focus control within a focus region. In this case, the controlling unit 6022 is configured to: in response to determining that the focus control instruction is a clicking instruction on the focus control, perform an operation corresponding to the focus control based on the clicking instruction.

In an example, the focus object is a focus control within a focus region. In this case, the controlling unit 6022 is configured to: in response to determining that the focus control instruction is a focus state switching instruction, acquire a first focus object that is displayed in the focus state manner currently; determine a second focus state based on the focus state switching instruction and the first focus object; and switch the focus state from the first focus object to the second focus object.

With the apparatus for controlling an interface focus on a display interface according to embodiments of the disclosure, the processed display interface is obtained by processing current display interface based on the key identifier and the corresponding key manner from a terminal device, and the processed display interface is projected on the display screen of the in-vehicle system. Therefore, the processing of the current display interface is realized through the key operation instruction from the terminal device, the processed display interface is synchronized to the display screen of the in-vehicle system, and the focus state function is achieved by the hardware keys of the terminal device, which improves the user experience and facilitates use.

The foregoing explanation of the method embodiment for controlling an interface focus on a display interface is also applied to an apparatus for controlling an interface focus on a display interface in the embodiment, which will not be repeated here.

In embodiments of the disclosure, tan electronic device, a readable storage medium and a computer program product are provided.

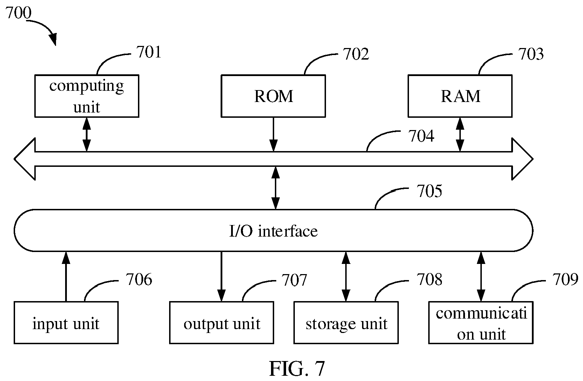

FIG. 7 is a block diagram illustrating an electronic device 700 configured to implement the embodiment of the disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 7, a device 700 includes a computing unit 701, configured to execute various appropriate actions and processes according to a computer program stored in a read-only memory (ROM) 702 or loaded from a storage unit 708 to a random access memory (RAM) 703. In a RAM 703, various programs and data required by an operation of a device 700 may be further stored. A computing unit 701, a ROM 702 and a RAM 703 may be connected with each other by a bus 704. An input/output (I/O) interface 705 is also connected to a bus 704.

A plurality of components in the device 700 are connected to an I/O interface 705, and includes: an input unit 706, for example, a keyboard, a mouse, etc.; an output unit 707, for example various types of displays, speakers; a storage unit 708, for example a magnetic disk, an optical disk; and a communication unit 709, for example, a network card, a modem, a wireless transceiver. The communication unit 709 allows a device 700 to exchange information/data through a computer network such as internet and/or various types of telecommunication networks and other devices.

The computing unit 701 may be various types of general and/or dedicated processing components with processing and computing ability. Some examples of a computing unit 701 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 701 performs various methods and processings as described above, for example, a method for controlling an interface focus on an interface. For example, in some embodiments, the method may be further achieved as a computer software program, which is physically contained in a machine readable medium, such as a storage unit 708. In some embodiments, a part or all of the computer program may be loaded and/or installed on the device 700 via a ROM 702 and/or a communication unit 709. When the computer program is loaded on a RAM 703 and performed by a computing unit 701, one or more blocks in the above method may be performed. Alternatively, in other embodiments, a computing unit 701 may be configured to perform the method for controlling an interface focus on an interface in other appropriate ways (for example, by virtue of a firmware).

Various implementation modes of the systems and technologies described above may be achieved in a digital electronic circuit system, a field programmable gate array (FPGA), an application-specific integrated circuit (ASIC), an application specific standard product (ASSP), a system-on-chip (SOC) system, a complex programmable logic device, a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the disclosure, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphic user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, and further may be a server of a distributed system, or a server in combination with a blockchain.

It is understandable that, various forms of procedures shown above may be configured to reorder, add or delete blocks. For example, blocks described in the disclosure may be executed in parallel, sequentially, or in different orders, as long as the desired result of the technical solution disclosed in the present disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors. Any modification, equivalent replacement, improvement, etc., made within the scope of embodiments of the present disclosure shall be included within the protection scope of the present disclosure.

## Claims

1. A method for controlling an interface focus on a display interface, comprising:
acquiring (101; 201) a key operation instruction from a terminal device, wherein, the key operation instruction comprises a ley identifier and a corresponding key manner;
obtaining a processed display interface by processing (102) a current display interface based on the key identifier and the key manner; and
projecting (103; 204) the processed current display interface on a display screen of an in-vehicle system.

2. The method of claim 1, wherein, the current display interface comprises one or more focus objects, and processing (102) the current display interface based on the key identifier and the key manner comprises:
for each focus object, determining (202) a focus control instruction on a focus object based on the key identifier and the key manner; and
controlling (203) the focus object based on the focus control instruction.

3. The method of claim 2, wherein, there are a plurality of the focus objects, and controlling (203) the focus object based on the focus control instruction comprises:
in response to determining that the focus control instruction is a displaying instruction of displaying the focus objects in a focus state manner, determining a displaying sequence of displaying the focus objects in the focus state manner based on the displaying instruction; and
controlling to display the plurality of focus objects in the focus state manner sequentially based on the displaying sequence.

4. The method of claim 3, further comprising:
for each focus object, determining a displaying duration corresponding to the focus object based on the key identifier and the key manner; and
controlling a duration of displaying the focus object in the focus state manner based on the displaying duration.

5. The method of claim 2, wherein the focus object is a focus region, and controlling (203) the focus object based on the focus control instruction comprises:
in response to determining that the focus control instruction is a confirmation instruction on the focus region, determining a focus control within the focus region based on the confirmation instruction; and
controlling to display the focus control in the focus state manner.

6. The method of claim 2, wherein the focus object is a focus control within a focus region, and controlling (203) the focus object based on the focus control instruction comprises:
in response to determining that the focus control instruction is a clicking operation on the focus control, performing an operation corresponding to the focus control based on the clicking instruction.

7. The method of claim 2, wherein controlling (203) the focus object based on the focus control instruction comprises:
in response to determining that the focus control instruction is a focus state switching instruction, acquiring a first focus object that is displayed in the focus state manner currently;
determining a second focus state based on the focus state switching instruction and the first focus object; and
switching a focus object displayed in the focus state manner from a first focus object to a second focus object.

8. An apparatus (500; 600) for controlling an interface focus on a display interface, comprising:
an acquiring module (501; 601), configured to acquire a key operation instruction from a terminal device, wherein, the key operation instruction comprises a key identifier and a corresponding key manner;
a processing module (502; 602), configured to process a current display interface based on the key identifier and the key manner; and
a projecting module (503; 603), configured to project the processed display interface on a display screen of an on board terminal.

9. The apparatus (500; 600) of claim 8, wherein the current display interface comprises at least one focus object, and the processing module (602) comprises:
a determining unit (6021), configured to, for each focus object, determine a focus control instruction on the focus object based on the key identifier and the key manner; and
a controlling unit (6022), configured to control the focus object based on the focus control instruction.

10. The apparatus (500; 600) of claim 9, wherein there are a plurality of the focus objects and the controlling unit (6022) is configured to:
in response to determining that the focus control instruction is a displaying instruction of displaying the focus objects in a focus state manner, determine a displaying sequence of displaying the focus objects based on the displaying instruction; and
control to display the plurality of focus objects sequentially based on the displaying sequence.

11. The apparatus (500; 600) of claim 10, further comprising:
a determining module (604), configured to, for each focus object, determine a displaying duration corresponding to the focus object based on the key identifier and the key manner; and
a controlling module (605), configured to control a duration of displaying the focus object in the focus state manner based on the displaying duration.

12. The apparatus (500; 600) of claim 9, wherein the focus object is a focus region, and the controlling unit (6022) is configured to:
in response to determining that the focus control instruction is a confirmation instruction on the focus region, determine a focus control within the focus region based on the confirmation instruction; and
control to display the focus control in the focus state manner.

13. An electronic device, comprising:
at least one processor; and
a memory communicatively connected to the at least one processor; wherein,
the memory stores instructions executable by the at least one processor; and
when the instructions are performed by the at least one processor, the at least one processor is caused at least one processor to perform the method of any of claims 1 to 7.

14. A non-transitory computer readable storage medium, having computer instructions stored thereon, wherein, when the computer instructions are executed by a computer, the computer is caused to perform the method of any of claims 1 to 7.

15. A computer program product, comprising a computer program, wherein, when the computer program is performed by a processor, the method of any of claims 1 to 7 is executed.
